# EUROPEAN PATENT SPECIFICATION

(11) **EP 2 203 323 B1**
(45) Date of publication and mention of the grant of the patent: **07.12.2011**
(21) Application number: 08844177.9
(22) Date of filing: 29.10.2008
(51) Int. Cl.: B60H 1/32

(54) **COOLING SYSTEM FOR AN AUTOMOTIVE VEHICLE**
KÜHLSYSTEM FÜR EIN AUTOMOBIL
SYSTÈME DE REFROIDISSEMENT POUR UN VÉHICULE AUTOMOBILE

(30) Priority: 02.11.2007 ES 200702887
(43) Date of publication of application: 07.07.2010
(73) Proprietor: L. Oliva Torras, S.A., 08241 Manresa (ES)
(72) Inventor: CASTELLTORT NADAL, Vicente, E-08241 Manresa (ES); FERNANDEZ MUÑOZ, Santiago, E-08241 Manresa (ES); RODRIGO CAMPAMA, Manuel, E-08241 Manresa (ES)
(74) Representative: Sugrañes Patentes y Marcas
(86) International application number: PCT/EP2008/064658
(87) International publication number: WO 2009/056561

(56) References cited:
- EP-A- 1 046 525
- EP-A- 1 598 616
- EP-A- 1 790 921
- US-A1- 2002 073 721
- US-B1- 6 196 009

## Description

### Technical Field of the Invention

The invention relates to a cooling system for an automotive vehicle and to a method for the start-up of a cooling system comprising at least one closed cooling circuit including a hermetic compressor which is fed with the electric power generated from the engine of the vehicle.

### Background of the Invention

Cooling systems for refrigerated compartments provided in transport vehicles, such as delivery vans, are generally actuated by the engine driving the vehicle.

The cooling units of these systems normally comprise a compressor and respective evaporation and condensation units needing energy to operate.

With respect to the compressor, it can be open and be actuated mechanically, or hermetic and actuated by an electric motor that is fed by means of the electric power generated from the engine driving the vehicle.

In this second case, it is normal to provide the cooling system with an alternator mechanically coupled to the engine of the vehicle and with an inverter unit to adapt the electric current generated by the alternator to the needs of the compressor.

Even though the capacity of the inverter units is sized for the correct operation in any of the work regimes of the cooling system, the start requires a much greater delivery of energy than the maximum delivery for operation, basically due to the demand of the compressor upon initiating its operation. Among the loads that are fed for the operation of a system of these features, the compressor is responsible for most of the absorbed power.

During the start-up operations of the system, the power necessary to start the compressor can even be multiplied with respect to the maximum power the compressor could consume in the stationary operation of the system. Despite the inverter unit being capable of increasing the rotation speed of the compressor independently of the rotation speed of the alternator, this can only occur within margins of required power, which are exceeded during the start-up of the system. For this reason the start-up is considered the most critical operation.

Patent document US6196009 describes a common solution adopted in this type of system to successfully carry out the start-up operations of the system. This solution consists of overfeeding the engine of the vehicle with the object of increasing the rotation speed of the alternator and in consequence the electric power produced. This solution can involve having to oversize the performance of the inverter unit, significantly increasing the cost of the installation.

Patent document EP1790921 also relates to this problem, the adopted solution being to provide the system with a control unit to vary the rotation speed of the engine of the vehicle adapting it to the energy demand requested by the compressor, especially for the peaks of demand associated with the start-up of the mentioned compressor.

EP 1598616 discloses a further similar system.

A main objective of the present invention is to provide a system like the one described above with the technical features necessary to assure the start-up not only of a compressor associated to a closed cooling circuit, but also of several compressors associated to different cooling circuits, such that these circuits can be fed by means of a single inverter unit and without the need for the inverter unit to be oversized.

### Disclosure of the Invention

The technical solution that is proposed is in some way contrary to the solutions adopted by the state of the art in that rather than increasing the power delivered to the compressor, it is sought to adjust or reduce the power delivery requirement of each compressor at the moment of the start-up.

The cooling system according to the invention is of those comprising at least one closed cooling circuit including at least one electrically powered compressor, preferably of the hermetic type, and respective evaporation and condensation units arranged upstream and downstream, respectively, of the mentioned compressor. In essence, the system is characterized in that said circuit is provided with a bypass branch capable of establishing direct hydraulic communication between the high-pressure part of the circuit, specifically the discharging section of the compressor, and the low-pressure part of the circuit, specifically the suctioning section of the compressor, in which a corresponding bypass valve is installed; with a check valve in the high-pressure part of the circuit, arranged after and downstream of the bypass branch; and with a suction pressure regulating valve, arranged in the low-pressure part of the circuit upstream of the bypass branch; and in that said system is further provided with at least one control unit for the selective actuation of the compressors and of at least the bypass valves of the system.

It has to be understood that the high-pressure part of the circuit is the part comprised between the compressor and the corresponding evaporation unit; and that the low-pressure part of the circuit is the part comprised between said evaporation unit and the compressor.

It is therefore possible to connect temporarily, and preferably during the start-up operations of the system, the discharge section of the compressor with the suctioning section of the compressor, isolating said sections from the flow of the rest of the circuit and significantly reducing the compression work at the moment of the start-up, and in consequence the requested power.

Furthermore, due to the fact that the compression work is directly linked not only to the compression ratio between the suction pressure and the discharge pressure, but also with the mass volume to be compressed, with the suction pressure regulating valve also having the means necessary for the control of the mentioned mass volume.

The purpose of this valve is to limit the suction pressure when the compressor is operating. This pressure will determine the maximum mass of coolant that will remain in the suction line accumulated in the suctioning section when the compressor is stopped.

According to another feature of the invention, the closed cooling circuit further comprises flow regulation means of the suctioning section of the low-pressure part of the circuit.

According to a variant of the invention, the mentioned flow regulation means are formed by a second check valve installed in the low-pressure part of the circuit, between the compressor and the pressure regulating valve, intended to isolate the suctioning section of the compressor from the rest of the low-pressure part of the circuit.

According to a preferred variant, the mentioned flow regulation means are formed by a solenoid valve installed in the low-pressure part of the circuit, between the compressor and the pressure regulating valve. The function of this valve is to prevent the suctioning of coolant by the compressor at the moment of the start-up as well as to prevent the migration of coolant towards the compressor when the latter is stopped.

According to another feature of the invention, the system comprises an electric power generation unit comprising an alternator, mechanically coupled to the engine of the vehicle and supplying a three-phase or direct voltage, and an inverter unit transforming the supplied voltage into constant single-phase and sinusoidal profile voltage, to which one or more compressors associated to corresponding cooling circuits of the system are connected.

According to an embodiment in accordance with this feature, the coil of the bypass valve is fed by a regulated power source, and the mentioned coil of the bypass valve is preferably a low voltage direct current coil, which is fed by a regulated power source in turn fed by the inverter group.

According to a variant of the invention, the number of closed cooling circuits is two, the first being an air-conditioning equipment for the passenger area of the automotive vehicle and the second being a cooling equipment of a refrigerated compartment, such as a cooling chamber of a delivery van, and the control unit of the system is adapted so that during a predetermined start-up period of the system the inverter selectively supplies electric current to one of the compressors associated with one of the equipment, and during the normal operating regime of the system, to the two compressors simultaneously.

With this feature it is sought that the adjustment of the required power is also carried out by means of a sequential start-up of the loads of the system, both of the compressor and of the fans of the condensation and evaporation units of the same cooling circuit, and of the compressors associated to different cooling circuits.

According to another aspect of the invention, a method is disclosed for the start-up of a cooling system for an automotive vehicle comprising at least one closed cooling circuit including an electrically powered compressor and respective evaporation and condensation units arranged upstream and downstream, respectively, of the mentioned compressor.

The method in question is characterized in that it comprises the sequence of actions of short-circuiting the compressor, establishing hydraulic communication between a high-pressure part of the circuit, for discharging the compressor, and a low-pressure part of the circuit, for suctioning the compressor; once the pressures at the inlet and at the outlet of the compressor have been equalized, starting the compressor, powering it electrically; and, once the compressor is operating stably, interrupting the short-circuited hydraulic communication.

According to another feature, the method is characterized in that it comprises the added actions of, during the last stop operations of the system before the start-up, interrupting the passage of coolant in a low-pressure part of the circuit upstream of the suctioning section of the compressor, isolating the mentioned suctioning section of the compressor from the low-pressure part of the circuit a predetermined time before stopping the same, which is preferably carried out when the pressure in the low-pressure part of the circuit is less than a predetermined value; and, in the start-up of the system, in advance of the action of interrupting the short-circuited hydraulic communication, allowing the passage of coolant establishing hydraulic communication between the suctioning section of the compressor and the low-pressure part of the circuit.

The compressor is preferably stopped when the pressure in the low-pressure part of the circuit is less than a predetermined value.

According to a particularly interesting variant of the method, the latter comprises the uninterrupted actions of preventing the flow of coolant towards the discharging of the compressor in the high-pressure part of the circuit; and limiting the suction pressure when the compressor is operating.

According to another feature, the method is characterized in that the actions of interrupting and allowing the passage of coolant in a low-pressure part of the circuit upstream of the suctioning section of the compressor, to interrupt or establish, respectively, hydraulic communication between the low-pressure part of the circuit and the suctioning section of the compressor are carried out by means of the actuation of a normally closed solenoid valve, fed in parallel with the compressor.

The action of short-circuiting the compressor is preferably carried out by means of the actuation of a bypass valve, fed at a low voltage by a regulated power source.

### Brief Description of the Drawings

Figure 1 schematically shows a system according to the invention installed in a lightweight goods transport vehicle;
Figure 2 shows the hydraulic scheme of a closed cooling circuit according to the system of the invention; and
Figure 3 shows the electrical scheme of a system according to the invention, comprising two closed cooling circuits similar to that of Figure 2.

### Detailed Description of the Drawings

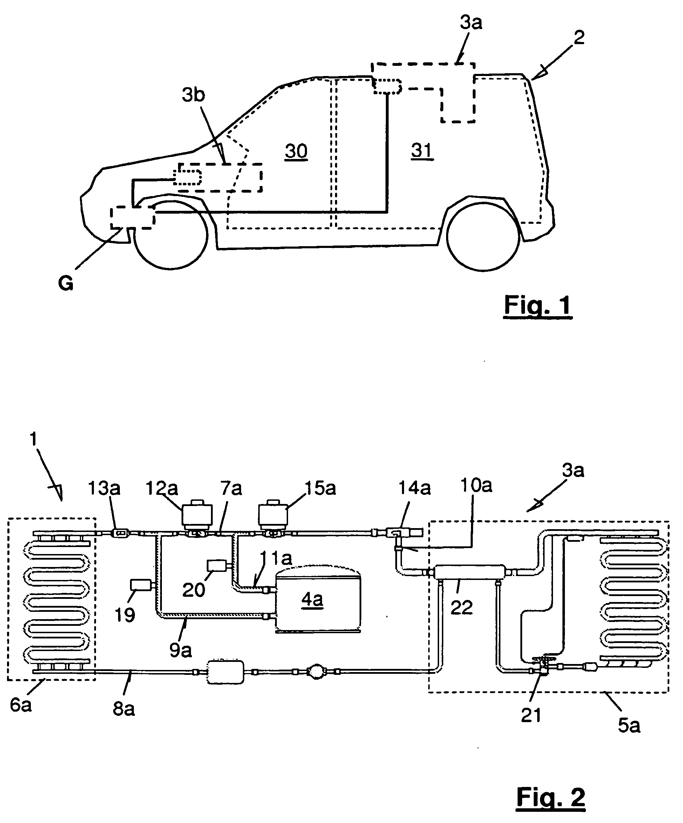

Figure 2 shows the hydraulic scheme of a closed cooling circuit 3a comprised in a cooling system 1 according to the invention.

The closed cooling circuit 3a follows a conventional, hermetic compression system, and comprises a hermetic compressor 4a, designed to operate from single-phase, 50 Hz, sinusoidal 230 V, and respective ventilated evaporation 5a and condensation 6a units. In the circuit shown, the parts of the cooling circuit 3a considered in the present description as the suctioning section 11 a and the discharge section 9a of the compressor 4a have been highlighted with shading.

At the circuit level, the solution for discharging the compressor 4a at the moment of the start-up of the cooling system incorporates several extra components which are the following:
- a bypass branch 7a, in which there is installed a corresponding bypass valve 12a, intended to establish direct hydraulic communication between a high-pressure part of the circuit 8a, specifically the discharge section of the compressor 9a, and a low-pressure part of the circuit 10a, specifically the suctioning section of the compressor 11 a, for the purpose of reducing the compression ratio;
- a check valve 13a in the high-pressure part of the circuit 8a, arranged after and downstream of the bypass branch 7a;
- a suction pressure regulating valve 14a, arranged in a low-pressure part of the circuit 10a, upstream of the bypass branch 7a; and
- a solenoid valve 15a to regulate the access of coolant to the suctioning section 11 a of the compressor 4a.

Other conventional components of the cooling circuit 3a of Figure 2, are formed by the pressure transducers or pressostats 19 and 20, the heat exchanger 22 and the expansion valve 21.

For starting and stopping the cooling circuit 3a it is preferable to first start the compressor 4a and to later feed the fans of the evaporation 5a and condensation 6a units.

Therefore with respect to the compressor 4a, the recommended sequence of actions for starting it consists of first opening the bypass valve 12a and, after time has passed to assure an equalization of pressures in the discharge section 9a and suctioning section 11 a of the compressor 4a, feeding the compressor 4a. When the compressor 4a is operating stably, the coolant flow regulation means 15a are opened, in this case of the solenoid valve and, after the necessary time has to passed to assure stable actuation, the bypass valve 12a is closed.

Naturally, depending on the application and on the work conditions, this sequence of actions can be varied to assure a progressive and optimal increase in power consumption.

In relation to stopping the circuit, it is recommendable to do the opposite and first cut the power supply to the fans of the evaporation 5a and compression 6a units and to the solenoid suction valve 15a. Once a low pressure value is reached in the suctioning section 11 a of the compressor 4a, the same can be stopped.

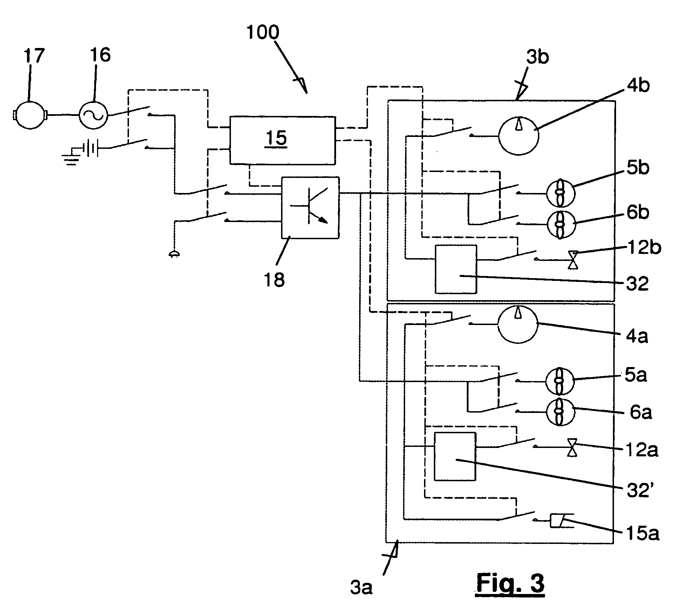

The actuation mechanisms of each one of these components become more or less important according to the conditions that the cooling circuit 3a of the system 1 may be in. Thus for example, after a long enough period, the voltages within the circuit would be balanced and would be equivalent to the saturated ambient temperature. In these circumstances, depending on what the ambient temperature is, the initial power delivery for starting the compressor 4a can be several times greater than that needed to keep the compressor operating in normal or stationary regimen. To solve this drawback the bypass branch 7a is provided and the corresponding bypass valve 12a is placed, which prevents the pressure against which the compressor 4a has to work from increasing, the latter being limited to the losses through the bypass branch 7a. Despite this solution allowing by itself cutting down on the required power, in many cases the energy requirement in a small space of time causes the output voltage of the inverter 18 (see Figure 3) from being kept within the margin of regulation and decreasing below a threshold, below which the bypass valve 12a does not assure its stable opening. This instability would cause the disappearance of the effect of the bypass and the compressor 4a would be obliged to compress the coolant at the pressure to that to which the high-pressure part of the circuit 8a is subjected in order to start. In conclusion, the compressor 4a would not start with the power that the inverter 18 would be capable of supplying it with. This phenomenon is solved by feeding the coil of the bypass valve 12a through a regulated power source 32' (see Figure 3). So that the latter can be fed from the inverter 18 using a standard coil, it is preferable to choose a low voltage direct current coil. Stable operation is thus achieved during the course of the transient of the start-up, independently of the variation of the output voltage of the inverter 18.

In addition, in the event of wishing to start up after a short duration, the pressure conditions would be different in the part of the high 8a and low 10a pressure circuit, respectively. In this case, upon trying to start the compressor 4a by means of the opening of the bypass valve 12a, the actual valve would open a direct communication pathway between both sections of the cooling circuit 3a with the consequent migration of coolant from the part high pressure part 8a of the circuit to the low pressure part 10a. This transitory situation would cause a significant increase in the pressure of the coolant in the suctioning section 11a of the compressor 4a at the moment of the start-up. The consequence would be a decrease in the specific volume of the suctioned coolant which would result in an increase in the compression work. The check valve 13a has the function of retaining the coolant in the high-pressure part of the circuit 8a, isolating it from the bypass branch 7a. When the bypass valve 12a is opened, the coolant contained in the discharge section 9a of the compressor 4a and the check valve 13a is diluted in the low-pressure area of the circuit, keeping a specific volume of the coolant suctioned by the high compressor 4a resulting in reduced compression work at the moment of initiating the operation.

If the start-up occurs after a prolonged stop, the pressures in the high 8a and low 10a pressure parts of the cooling circuit 3a are equalized. The value of the pressure will depend directly on the ambient temperature and can, in some cases, exceed the critical temperature above which the mass of the volume to compress is high enough and the compression force exceeds the load capacity of the inverter 18. In this case the compressor 4a will not initiate operation. The solenoid valve 15a regulating the flow of the suctioning section 11 a establishes an isolation of said section from the rest of the cooling circuit 3a. The mass of coolant contained in the area of the compressor, between the solenoid valve 15a and the check valve 13a, thus remains constant independently of the duration of the stop of the compressor 4a or of the conditions of the system at the moment of the start-up. This amount of coolant will be determined, in the worst case scenario, by the value of the adjustment of the suction pressure regulating valve 14a. At the moment of the start-up, the pressure, normally not saturated in temperature ambients greater than the adjustment temperature of the suction pressure regulating valve 14a, will depend on the environmental conditions without the latter being predictably close to the critical value.

According to the electrical scheme shown in Figure 3, the solenoid valve 15a is powered simultaneously with the compressor 4a. The mass of coolant in the area of the compressor 4a is thus limited to that contained at the time such compressor is disconnected, without the coolant migrating to the compressor 4a through the suctioning section 11 a. In the same way, the start-up will occur simultaneously in the compressor 4a and in the solenoid valve 15a with the effect of starting up the compressor 4a with a reduced volume of coolant. In an optimal case, the closure of the solenoid valve 15a can occur before the disconnection of the compressor 4a. The result is that the actual compressor 4a pumps the coolant out of the so-called area of the compressor (between the solenoid valve 15a and the check valve 13a), this achieving that the mass of coolant contained in this part of the circuit is minimum. As a result, the compression work of this coolant with a large specific volume favours the peak of the start-up of the compressor 4a being reduced to values that are much close to those of electric machine actuating it.

Figure 3 shows the electric scheme of a system 100 according to the invention, comprising two closed cooling circuits 3a and 3b, hydraulically independent but powered by one and the same inverter group 18.

According to the embodiment shown in this Figure 3, the closed circuit 3b would correspond, for example, to that of air conditioning equipment for the passenger area 30 of an automotive vehicle 2, specifically of a delivery van (see Figure 1), whereas the closed circuit 3a would correspond to that of the cooling unit of a refrigerated compartment such as the cooling chamber 31 of the same delivery van.

Said van can be marketed, as a standard, with air conditioning equipment of the type incorporating an open compressor, mechanically actuated by the engine of the vehicle, for example, by means of a transmission belt, and without a cold chamber having been provided at its rear part. In this case, it would be necessary for the implementation of the system 100 according to the invention, to substitute the standard with an alternator 16, couplable to the engine 17 of the vehicle and an inverter group 18. With regard to the closed cooling circuit 3b, it would be necessary to install a hermetic compressor 4b, electrically actuatable from the current supplied by the inverter 18. In addition, the cooling equipment intended to cool the chamber should be installed, in which the associated compressor 4a would also be suitable for being electrically actuated from the current supplied by the inverter 18.

The possibility is contemplates that the alternator 16 supplies a three-phase current or a direct current, for example of 12V or 24V, which will subsequently be transformed by the inverter group 18.

In any case, the possibility of powering and controlling the compressor 4b in substitution of the original mechanical actuation open compressor in the vehicle, keeping the rest of the original circuit intact, represents an alternative in applications in which is not enough space for the assembly of more than one mechanical actuation compressor (one for each closed cooling system 3a and 3b).

The system represented in Figure 3 comprises a control unit 15 which it manages, especially during the start-up periods of the system 100, the supply of current to the compressors 4a and 4b and to the valves of the associated closed cooling circuits 3a and 3b to out the described start-up method into practice.

For the start-up of the system 100, the control unit 15 would be programmed to actuate the compressors 4a and 4b and the valves of the associated closed cooling circuits 3a and 3b following a protocol for the simultaneous start-up of the two compressors 4a and 4b in the event that the start-up requests. In this case, the compressor 4b of the closed cooling system 3b could be started up first and by way of example, carrying out the actions of first opening the bypass valve 12b and, after the time for assuring the equalization of pressures in the discharge and suctioning sections of the compressor 4b has elapsed, of powering the compressor 4b. Once the stable actuation of the compressor 4b is reached, the bypass valve 12b is closed and the fans, if any, of the evaporation units 5b and condensation units 6b are subsequently opened. It must be noted that in the example shown, the solenoid valve for regulating the flow rate of coolant in the direction to the suctioning section 11 a of the compressor 4b has been eliminated or substituted with a check valve.

The compressor 4a would then be started up, first opening the bypass valve 12a and, after the time for assuring the equalization of pressures in the discharge sections 9a and suctioning sections 11a of the compressor 4a has elapsed, feeding the compressor 4a. Reaching a stable operation of the compressor 4a, the flow regulation means 15a, in this case the solenoid valve, is opened and, after the time necessary for assuring a stable actuation has elapsed, the bypass valve 12a would be closed.

With the cascade start-up described, the energy requested from the inverter 18 as well as the power of the stabilized sources 32 and 32' feeding the coils of the bypass valves 12b and 12a, respectively, of each compressor is limited. It is noted that, despite the fact that a stabilized source 32' and 32 has been shown for each bypass valve 12a and 12b, one and the same source could feed both valves.

## Claims

1. An automotive vehicle cooling system (1, 100) comprising at least one closed cooling circuit (3a, 3b) including at least one electrically powered compressor (4a, 4b) and respective evaporation (5a, 5b) and condensation (6a, 6b) units arranged upstream and downstream, respectively, from the mentioned compressor, said circuit being provided with
- a bypass branch (7a) capable of establishing direct hydraulic communication between the high-pressure part of the circuit (8a), specifically the discharging section (9a) of the compressor, and the low-pressure part of the circuit (10a), specifically the suctioning section (11a) of the compressor, in which a corresponding bypass valve (12a, 12b) is installed;
- a check valve (13a) in the high-pressure part of the circuit, arranged after and downstream of the bypass branch; and
- a suction pressure regulating valve (14a), arranged in the low-pressure part of the circuit, upstream of the bypass branch;
the system further having at least one control unit (15) for the selective actuation of the compressor and of the valves of the system, **characterized in that**
the closed cooling circuit (3a) further comprises flow regulation means (15a) of the suctioning section (11 a) of the low-pressure part of the circuit (10a).

2. The system (1, 100) according to claim 1, **characterized in that** the mentioned flow regulation means (15a) are formed by a second check valve installed in the low-pressure part of the circuit (10a), between the compressor (4a) and the pressure regulating valve (14a), intended to isolate the suctioning section (11a) of the compressor from the rest of the low-pressure part of the circuit.

3. The system (1, 100) according to claim 1, **characterized in that** the mentioned flow regulation means (15a) are formed by a solenoid valve in the low-pressure part of the circuit (10a), between the compressor (4a) and the pressure regulating valve (14a), intended to isolate the suctioning section (11a) of the compressor from the rest of the low-pressure part of the circuit.

4. The system (1, 100) according to the previous claims, **characterized in that** it comprises an electric power generation unit (G) comprising an alternator (16), mechanically coupled to the engine of the vehicle (17) and supplying a predetermined voltage, and an inverter group (18), transforming the supplied voltage into constant single-phase and sinusoidal profile voltage, to which one or more compressor (4a, 4b) associated to corresponding cooling circuits of the system (3a, 3b) are connected.

5. The system (1, 100) according to claims 3 and 4, **characterized in that** the coil of the bypass valve (12, 12b) is fed by a regulated power source (32, 32').

6. The system according to claim 5, **characterized in that** the coil of the bypass valve (12a, 12b) is a low voltage, continuous current coil which is fed by a regulated power source in turn fed by the inverter group (18).

7. The system (100) according to claims 2 to 6, **characterized in that** the number of closed cooling circuits (3a, 3b) is two, the first being that of an air-conditioning unit for the passenger area (30) of the automotive vehicle (2), and the second one being that of cooling equipment of a refrigerated compartment (31), such as a cooling chamber (31) of a delivery van, and **in that** the control unit of the system is adapted so that during a predetermined start-up period of the system the inverter selectively supplies electric current to one of the compressors associated with one of the units, and during the normal operation of the system, to the two compressors simultaneously.

8. A method for the start-up of a cooling system for an automotive vehicle (2), comprising a least one closed cooling circuit (3a, 3b) including an electrically powered compressor (4a, 4b) and respective evaporation (5a, 5b) and condensation (6a, 6b) units arranged upstream and downstream, respectively, from the mentioned compressor, the method comprising the following sequence of actions:
- short-circuiting the compressor establishing hydraulic communication between the high-pressure part of the circuit (8a), for discharging the compressor (9a), and the low-pressure part of the circuit (10a), for suctioning the compressor (11 a); once the pressures at the inlet and at the outlet of the compressor have been equalized, starting up the compressor, electrically powering it; and, once the compressor is operating stably, interrupting the short-circuited hydraulic communication, and being **characterized in that** it comprises the following added actions:
- during the last operations for stopping the system before start-up, interrupting the passage of coolant in the low-pressure part of the circuit (10a) upstream of the suctioning section (11a) of the compressor, isolating the mentioned suctioning section of the compressor of the low-pressure part of the circuit some time before stopping the same; and
- in the start-up of the system, before the action of interrupting the short-circuited hydraulic communication, allowing the passage of coolant establishing hydraulic communication between the suctioning section of the compressor (11 a) and the low-pressure part of the circuit (10a).

9. The method according to claim 8, **characterized in that** the compressor (4a, 4b) is stopped when the pressure in the low-pressure part of the circuit (10a) is less than a predetermined value.

10. The method according to claim 8, **characterized in that** it comprises the uninterrupted actions of:
- preventing the flow of coolant towards the discharge of the compressor in the high-pressure part of the circuit; and
- limiting the suction pressure when the compressor is operating.

11. The method according to claims 9 to 10, **characterized in that** the actions of interrupting and allowing the passage of coolant in a part of the circuit upstream of the suctioning section of the compressor to interrupt or establish, respectively, hydraulic communication between the low-pressure part of the circuit and the suctioning section of the compressor are carried out by means of the operation of a normally closed solenoid valve, operable independently of the compressor.

12. The method according to claims 9 to 11, **characterized in that** the action of short-circuiting the compressor is carried out by means of the actuation of a bypass valve, fed at a low voltage from a regulated power source.

## Patentansprüche

1. Kraftfahrzeugs Kühlsystem (1, 100), umfassend zumindest einen geschlossenen Kühlkreislauf (3a, 3b), welcher zumindest einen elektrisch angetriebenen Kompressor (4a, 4b) und jeweilige Verdampfungs- (5a, 5b) und Kondensationseinheiten (6a, 6b) enthält, welche jeweils aufwärts und abwärts von dem genannten Kompressor angeordnet sind, wobei der genannte Kreislauf mit
- einem Umgehungszweig (7a), welcher eine direkte hydraulische Verbindung zwischen dem Hochdruckteil des Kreislaufs (8a), besonders dem Entladungsabschnitt (9a) des Kompressors, und dem Niederdruckteil des Kreislaufs (10a), besonders dem Ansaugabschnitt (11a) des Kompressors, herstellen kann, in welchem ein entsprechendes Umgehungsventil (12a, 12b) installiert ist;
- einem Rückschlagventil (13a) in dem Hochdruckteil des Kreislaufs, welches nach und abwärts von dem Umgehungszweig angeordnet ist; und
- einem Saugdruckregelventil (14a), welches in dem Niederdruckteil des Kreislaufs, aufwärts von dem Umgehungszweig angeordnet ist;
versehen ist,
wobei das System zusätzlich zumindest eine Steuereinheit (15) für die selektive Betätigung des Kompressors und der Ventile des Systems aufweist, **dadurch gekennzeichnet, dass**
der geschlossene Kühlkreislauf (3a) zusätzlich Stromregulierungsmittel (15a) für den Ansaugabschnitt (11a) des Niederdruckteils des Kreislaufs (10a) umfasst.

2. System (1, 100) nach Anspruch 1, **dadurch gekennzeichnet, dass** die genannten Stromregulierungsmittel (15a) durch ein zweites Rückschlagventil gebildet sind, welches in dem Niederdruckteil des Kreislaufs (10a), zwischen dem Kompressor (4a) und dem Druckregelventil (14a), installiert ist, und dazu vorgesehen ist, den Ansaugabschnitt (11a) des Kompressors gegen dem restlichen Niederdruckteil des Kreislaufs zu isolieren.

3. System (1, 100) nach Anspruch 1, **dadurch gekennzeichnet, dass** die genannten Stromregulierungsmittel (15a) durch ein Magnetventil in dem Niederdruckteil des Kreislaufs (10a), zwischen dem Kompressor (4a) und dem Druckregelventil (14a), gebildet ist, welches dazu vorgesehen ist, den Ansaugabschnitt (11a) des Kompressors gegen dem restlichen Niederdruckteil des Kreislaufs zu isolieren.

4. System (1, 100) nach den vorherigen Ansprüchen, **dadurch gekennzeichnet, dass** es eine Einheit (G) für die Erzeugung elektrischer Energie umfasst, welche einen mechanisch mit dem Motor des Fahrzeugs (17) angekoppelten und eine vorbestimmte Spannung liefernden Wechselstromerzeuger (16) umfasst, und eine Wechselrichtergruppe (18), welche die gelieferte Spannung in eine konstante, einphasige, einen sinusförmigen Profil aufweisende Spannung umwandelt, an welcher ein oder mehrere Kompressor/en (4a, 4b) verbunden ist/sind, welcher/welche mit entsprechende Kühlkreisläufe des Systems (3a, 3b) in Verbindung ist/sind.

5. System (1, 100) nach den Ansprüchen 3 und 4, **dadurch gekennzeichnet, dass** die Spule von dem Umgehungsventil (12, 12b) von einer geregelten Stromquelle (32, 32') versorgt wird.

6. System nach Anspruch 5, **dadurch gekennzeichnet, dass** die Spule von dem Umgehungsventil (12a, 12b) eine Unterspannungsspule mit Gleichstrom ist, welche von einer geregelten Stromquelle versorgt wird, die ihrerseits von der Wechselrichtergruppe (18) versorgt wird.

7. System (100) nach den Ansprüchen 2 bis 6, **dadurch gekennzeichnet, dass** die Anzahl an geschlossenen Kühlkreisläufen (3a, 3b) von zwei ist, wobei der erste einer Klimaanlage für den Fahrgastraum (30) des Kraftfahrzeugs (2) gehört, und der zweite einer Kühleinrichtung von einem Kühlfach (31), wie einer Kühlkammer (31) eines Lieferwagens, gehört, und dass die Steuereinheit des Systems so angepasst ist, dass während einer vorbestimmten Anlaufperiode des Systems, der Wechselrichter einem der mit einer der Einheiten in Verbindung stehenden Kompressoren selektiv einen elektrischen Strom liefert, und während dem normalen Betrieb des Systems, beiden Kompressoren gleichzeitig.

8. Verfahren für den Anlauf eines Kühlsystems für einen Kraftfahrzeug (2), umfassend zumindest einen geschlossenen Kühlkreislauf (3a, 3b), welcher einen elektrisch angetriebenen Kompressor (4a, 4b) und jeweilige Verdampfungs- (5a, 5b) und Kondensationseinheiten (6a, 6b) enthält, welche jeweils aufwärts und abwärts von dem genannten Kompressor angeordnet sind, wobei das Verfahren den folgenden Ablauf umfasst:
- Kurzschließen des Kompressors, unter Herstellung einer hydraulischen Verbindung zwischen dem Hochdruckteil des Kreislaufs (8a), zur Entladung des Kompressors (9a), und dem Niederdruckteil des Kreislaufs (10a), zur Ansaugung des Kompressors (11a); sobald der Druck am Eingang und am Ausgang des Kompressors ausgeglichen worden sind, Anlaufen des Kompressors, wobei dieser elektrisch angetrieben wird; und, sobald der Kompressor einen stabilen Betrieb aufweist, Unterbrechen der kurzgeschlossenen hydraulischen Verbindung, und **dadurch gekennzeichnet, dass** es folgende zusätzliche Schritte umfasst:
- während den letzten Vorgängen zum Stoppen des Systems vor dem Anlaufen, den Durchgang des Kühlmittels in dem Niederdruckteil des Kreislaufs (10a) aufwärts von dem Ansaugabschnitt (11a) des Kompressors unterbrechen, unter Isolierung des genannten Ansaugabschnitts des Kompressors des Niederdruckteils des Kreislaufs einige Zeit vor dessen Stoppen; und
- beim Anlaufen des Systems, vor dem Schritt der Unterbrechung der kurzgeschlossenen hydraulischen Verbindung, wobei der Durchgang des Kühlmittels ermöglicht und die Herstellung einer hydraulischen Verbindung zwischen dem Ansaugabschnitt des Kompressors (11a) und dem Niederdruckteil des Kreislaufs (10a) hergestellt wird.

9. Verfahren nach Anspruch 8, **dadurch gekennzeichnet, dass** der Kompressor (4a, 4b) gestoppt wird, wenn der Druck in dem Niederdruckteil des Kreislaufs (10a) kleiner als ein vorbestimmter Wert ist.

10. Verfahren nach Anspruch 8, **dadurch gekennzeichnet, dass** es folgende ununterbrochene Schritte umfasst:
- Verhinderung einer Strömung von Kühlmittel zum Auslauf des Kompressors in dem Hochdruckteil des Kreislaufs; und
- Begrenzen des Saugdrucks wenn der Kompressor in Betrieb ist.

11. Verfahren nach den Ansprüchen 9 bis 10, **dadurch gekennzeichnet, dass** die Schritte für das Unterbrechen und das Ermöglichen des Durchgangs von Kühlmittel in einem Teil des Kreislaufs aufwärts von dem Ansaugabschnitt des Kompressors zum Unterbrechen oder Herstellen jeweils einer hydraulischen Verbindung zwischen dem Niederdruckteil des Kreislaufs und dem Ansaugabschnitt des Kompressors mittels dem Betrieb eines normalerweise geschlossenen Magnetventils, welches unabhängig von dem Kompressor betrieben werden kann, durchgeführt werden.

12. Verfahren nach den Ansprüchen 9 bis 11, **dadurch gekennzeichnet, dass** der Schritt für das Kurzschließen des Kompressors mittels der Betätigung eines Umgehungsventils durchgeführt wird, welches von einer geregelten Stromquelle mit einer niedrigen Spannung versorgt wird.

## Revendications

1. Système de réfrigération d'un véhicule automobile (1, 100), comprenant au moins un circuit (3a, 3b) fermé de réfrigération incluant au moins un compresseur (4a, 4b) alimenté électriquement et des unités (5a, 5b) d'évaporation et (6a, 6b) de condensation respectives disposées en amont et an aval, respectivement, du compresseur mentionné, ledit circuit étant pourvu
- d'une branche (7a) de dérivation apte à établir une communication hydraulique directe entre la partie (8a) haute pression du circuit, spécifiquement le tronçon (9a) de décharge du compresseur, et la partie (10a) basse pression du circuit, spécifiquement le tronçon (11a) d'aspiration du compresseur, dans lequel est installée une vanne (12a, 12b) de dérivation correspondante;
- d'une vanne (13a) anti-retour dans la partie haute pression du circuit, disposé après et en aval de la branche de dérivation ; et
- d'une vanne (14a) régulatrice de pression d'aspiration, disposée dans la partie basse pression du circuit, en amont de la branche de dérivation;
le système ayant en outre au moins une unité (15) de contrôle pour l'actionnement sélectif du compresseur et des vannes du système, **caractérisé en ce que** le circuit (3a) fermé de réfrigération comprend des moyens (15a) de régulation de flux du tronçon (11a) d'aspiration de la partie (10a) basse pression du circuit.

2. Système (1, 100) selon la revendication 1, **caractérisé en ce que** les moyens (15a) de régulation de flux mentionnés sont constitués d'une deuxième vanne anti-retour installée dans la partie (10a) basse pression du circuit, entre le compresseur (4a) et la vanne (14a) régulatrice de pression, destinée à isoler le tronçon (11a) d'aspiration du compresseur du reste de la partie basse pression du circuit.

3. Système (1, 100) selon la revendication 1, **caractérisé en ce que** les moyens (15a) de régulation de flux mentionnés sont constitués d'une vanne solénoïde dans la partie (10a) basse pression du circuit, entre le compresseur (4a) et la vanne (14a) régulatrice de pression, destinée à isoler le tronçon (11a) d'aspiration du compresseur du reste de la partie basse pression du circuit.

4. Système (1, 100) selon les revendications précédentes, **caractérisé en ce qu'**il comprend une unité (G) de production électrique comprenant un alternateur (16), accouplé mécaniquement au moteur (17) du véhicule et fournissant une tension prédéterminée, et un groupe (18) inverseur, transformant la tension fournie en une tension monophasée constante et au profil sinusoïdal, auquel sont connectés un ou plusieurs compresseurs (4a, 4b) associés aux circuits de réfrigération correspondants du système (3a, 3b).

5. Système (1, 100) selon les revendications 3 et 4, **caractérisé en ce que** la bobine de la vanne (12, 12b) de dérivation est alimentée par une source (32, 32') d'énergie régulée.

6. Système (1, 100) selon la revendication 5, **caractérisé en ce que** la bobine de la vanne (12, 12b) de dérivation est une bobine à basse tension, à courant continue qui est alimentée par une source d'énergie régulée alimentée à son tour par un groupe (18) inverseur.

7. Système (1, 100) selon les revendications 2 à 6, **caractérisé en ce que** le nombre de circuits (3a, 3b) fermés de réfrigération est de deux, le premier étant celui d'une unité d'air conditionné pour la zone (30) passager du véhicule (2) automobile, et le second étant celui de l'équipement de réfrigération d'un compartiment (31) réfrigéré, tel qu'une chambre (31) de réfrigération d'une fourgonnette de livraison, et **en ce que** l'unité de commande du système est adaptée pour que pendant une période de démarrage prédéterminée du système l'inverseur fournit de façon sélective le courant électrique à l'un des compresseurs associés à l'une des unités, et pendant le fonctionnement normal du système, aux deux compresseurs simultanément.

8. Méthode pour le démarrage d'un système de réfrigération pour un véhicule (2) automobile, comprenant au moins un circuit (3a, 3b) fermé de réfrigération incluant un compresseur (4a, 4b) alimenté électriquement et des unités (5a, 5b) d'évaporation et (6a, 6b) de condensation respectives disposées en amont et an aval, respectivement, du compresseur mentionné, la méthode comprenant la séquence suivante d'actions :
- court-circuiter le compresseur en établissant une communication hydraulique entre la partie (8a) haute pression du circuit, pour décharger le compresseur (9a), et la partie (10a) basse pression du circuit, pour aspirer le compresseur (11a) ; une fois que les pressions à l'entrée et à la sortie du compresseur ont été égalisées, démarrer le compresseur, en l'alimentant électriquement ; et, une fois que le compresseur fonctionne de façon stable, interrompre la communication hydraulique court-circuitée,
et étant **caractérisée en ce qu'**elle comprend les actions complémentaires suivantes :
- pendant les dernières opérations pour arrêter le système avant le démarrage, interrompre le passage de fluide de refroidissement dans la partie (10a) basse pression du circuit en amont du tronçon (11a) d'aspiration du compresseur, en isolant le tronçon d'aspiration mentionné du compresseur de la partie basse pression du circuit un temps avant d'arrêter ce dernier, et
- au démarrage du système, avant l'action d'interrompre la communication hydraulique court-circuitée, permettre le passage de fluide de refroidissement en établissant une communication hydraulique entre le tronçon (11a) d'aspiration du compresseur et la partie (10a) basse pression du circuit.

9. Méthode selon la revendication 8, **caractérisée en ce que** le compresseur (4a, 4b) s'arrête lorsque la pression dans la partie (10a) basse pression du circuit est inférieure à une valeur déterminée.

10. Méthode selon la revendication 8, **caractérisée en ce qu'**elle comprend les actions ininterrompues de :
- éviter le flux de fluide de refroidissement vers la décharge du compresseur dans la partie haute pression du circuit ; et
- limiter la pression d'aspiration lorsque le compresseur est en fonctionnement.

11. Méthode selon les revendications 9 à 10, **caractérisée en ce que** les actions d'interrompre et de permettre le passage de fluide de refroidissement dans une partie du circuit en amont du tronçon d'aspiration du compresseur pour interrompre ou établir, respectivement, la communication hydraulique entre la partie basse pression du circuit et le tronçon d'aspiration du compresseur sont menées par le fonctionnement d'une vanne solénoïde normalement fermée, pouvant fonctionner indépendamment du compresseur.

12. Méthode selon les revendications 9 à 11, **caractérisée en ce que** l'action de court-circuiter le compresseur est mené par l'actionnement d'une vanne de dérivation, alimenté à basse tension à partir d'une source d'alimentation régulée.
